# EUROPÄISCHE PATENTANMELDUNG

(11) **EP 4 749 161 A1**
(43) Veröffentlichungstag der Anmeldung: **27.05.2026**
(21) Anmeldenummer: 25218479.1
(22) Anmeldetag: 25.11.2025
(51) Int. Cl.: F16H 55/16, F16H 55/18

(54) **ZAHNRAD MIT ZAHNABSCHNITTEN MIT VORSPRUNG UND AUSNEHMUNG**

(30) Priorität: 26.11.2024 DE 102024134832
(71) Anmelder: Horage SA, 2504 Biel (CH)
(72) Erfinder: Serex, Florian, 2022 Bevaix (CH); Lindstedt, Markus, 86438 Kissing (DE)
(74) Vertreter: Winter, Brandl - Partnerschaft mbB

(57) **Zusammenfassung**

Die Erfindung betrifft ein Zahnrad (1) für ein Uhrengetriebe, das eine Vielzahl von Zähnen (2) aufweist, wobei jeder Zahn (2) aus zwei voneinander in Umfangsrichtung beabstandeten Zahnabschnitten (3, 4) aufgebaut ist, wobei ein Zahnabschnitt (3 oder 4) jeweils eine Zahnflanke (5 oder 6) ausbildet, die selektiv in Abhängigkeit von der Drehrichtung des Zahnrads (1) mit einem Gegenzahn (7) eines Verzahnungspartners (8) in drehmomentweitergebendem Kontakt steht, wobei jeder Zahnabschnitt (3, 4) federnd ausgelegt ist, wobei die Zahnabschnitte (3, 4) eines Zahns (2) zum miteinander In-Kontakt-Gelangen vorbereitet sind, wobei das distale Ende (9) des einen Zahnabschnittes (3) einen Vorsprung (10) besitzt, der zum Eingreifen in eine Ausnehmung (11) des anderen Zahnabschnittes (4) des gleichen Zahns (2) ausgelegt ist.

## Beschreibung

Die Erfindung betrifft ein Zahnrad für ein Uhrengetriebe, das eine Vielzahl von Zähnen aufweist, wobei jeder Zahn aus zwei voneinander in Umfangsrichtung beabstandeten Zahnabschnitten aufgebaut ist, wobei ein Zahnabschnitt jeweils eine Zahnflanke ausbildet, die selektiv in Abhängigkeit von der Drehrichtung des Zahnrads mit einem Gegenzahn eines Verzahnungspartners in drehmomentweitergebendem Kontakt steht, wobei jeder Zahnabschnitt federnd ausgelegt ist, wobei die Zahnabschnitte eines Zahns zum miteinander In-Kontakt-Gelangen vorbereitet sind.

Mechanische Uhrwerke zeichnen sich durch eine Kombination aus geringen Drehmomenten und Kräften und hohen Ansprüchen an die Präzision aus. Für Verzahnungen, die nicht nur in einer Richtung bewegt werden, ergibt sich oft das Problem des Umkehrspiels in der Verzahnung. Befindet sich eine Zahnflanke eines Zahnes eines Zahnrads in Kontakt mit der gegenüberliegenden Zahnflanke eines Zahnes eines anderen Zahnrads, so gibt es üblicherweise einen kleinen Abstand zwischen den Zahnflanken, die auf der anderen Seite des Zahnes liegen und ihrem Gegenüber.

Das bedeutet, dass beim Umkehren der Drehrichtung eines Rads, welches ein anderes über eine Verzahnung antreibt, ein kurzer Leerweg zurückgelegt werden muss, um vom Kontakt der einen Zahnflanke auf den Kontakt der anderen Zahnflanke zu wechseln. Dieses Problem wird im Stand der Technik bisher dadurch gelöst, dass die Verzahnung von Zahnrädern als eine Federkonstruktion, das heißt als ein federnd ausgelegter Zahnabschnitt, ausgeführt wird. Damit befinden sich zum gleichen Zeitpunkt immer zwei gegensätzliche Zahnflanken einer Verzahnung (in und gegen Bewegungsrichtung) in Kontakt. Beim Umkehren der Drehrichtung muss kein Leerweg zurückgelegt werden. Infolgedessen tritt auch kein Umkehrspiel auf.

Aufgrund von Fertigungstoleranzen muss eine gemäß Stand der Technik ausgeführte gefederte Verzahnung immer eine Vorspannung aufweisen. Diese Vorspannung führt zu einer dauernd anliegenden Normalkraft zwischen den gegenüberliegenden Zähnen der Verzahnung, die sich beim Ablaufen der Verzahnung wiederum als Verluste äußert. Um diese Verluste so gering wie möglich zu halten, muss die Federvorspannung, das heißt die Vorspannung des federnden Zahnabschnittes, sehr klein sein.

Aufgrund der Fertigungstoleranzen wird diese Feder, das heißt der federnde Zahnabschnitt, unterschiedlich stark vorgespannt sein. Da es oft vorteilhaft ist, eine möglichst konstante Kraft und einen möglichst konstanten Reibungsverlust zu haben, sollte die Feder, das heißt der federnde Zahnabschnitt, einen relativ zu der Größe des Bereichs, in dem sich die Vorspannung durch die Fertigungstoleranzen ändert, großen Federweg haben.

Diese Anforderung bedingt jedoch oftmals, dass bei stärkeren als den zu erwartenden Drehmomenten die Feder, das heißt der federnde Zahnabschnitt, überlastet wird und sich plastisch verformt. Ein Positionieren eines Endanschlags mit einem definierten Abstand hinter dem gefederten Teil des Zahns zur Vermeidung von Überlastung und plastischer Verformung ist oftmals aus bauraumtechnischen Gründen nicht realisierbar.

Die vorliegende Erfindung hat es sich zur Aufgabe gesetzt, eine Verbesserung gegenüber dem Stand der Technik zu erreichen. Bekannte Nachteile sollen beseitigt werden oder zumindest gemindert werden.

Dies wird bei einem eingangs vorgestellten Zahnrad erfindungsgemäß dadurch erreicht, dass das distale Ende des einen Zahnabschnittes einen Vorsprung besitzt, der zum Eingreifen in eine Ausnehmung des anderen Zahnabschnittes des gleichen Zahns ausgelegt ist.

Mit anderen Worten betrifft die Erfindung ein Zahnrad mit einer Verzahnung mit gefederten Zähnen, das heißt gefederten Zahnabschnitten, mit einem integrierten Endanschlag, sodass bei stärkeren als den zu erwartenden Drehmomenten die Feder, das heißt die federnden Zahnabschnitte, nicht überlastet werden und sich nicht plastisch, das heißt irreversibel, verformen.

Durch die Ausführungsform der gefederten Zähne mit dem Endanschlag wird der Federweg des gefederten Teils der Verzahnung, das heißt der Zahnabschnitte, limitiert. Bei Erreichen des Limits wird die Federrate über den Endanschlag so weit erhöht, dass ein plastisches Verformen und damit eine Beschädigung der Feder, das heißt der Zahnabschnitte, unter den zu erwartenden Bedingungen (Belastungen wie Kräften oder Momenten) ausgeschlossen werden kann.

Hierzu wird ein Steg / ein Vorsprung in eine der beiden gefederten Zahnhälften, das heißt in eine der beiden Zahnabschnitte, im Bereich der Zahnflanken eingebracht. In den anderen, der gegenüberliegenden der beiden Zahnabschnitte wird eine Ausnehmung / zu dem Vorsprung passende Nut im Bereich der Zahnflanken eingebracht. Bei Belastung schiebt sich der Steg / Vorsprung zunächst in die Nut / Ausnehmung. Bei ausreichender Verformung der Feder, das heißt des Zahnabschnittes, erreicht der Steg / der Vorsprung eine der beiden Seiten / Absätze der Nut / Ausnehmung und liegt an.

Das heißt, es ist ein Endanschlag erreicht, der über die Ausführungsform der Zahnabschnitte mit Vorsprung und Ausnehmung im Bereich der Zahnflanken in vorteilhafter Weise in den Zahn des Zahnrads integriert ist. Ab diesem Zeitpunkt wird die Kraft nicht mehr als Biegung der Feder, das heißt des Zahnabschnittes, aufgenommen, sondern durch den anderen gefederten Arm / den anderen Zahnabschnitt des Zahns aufgenommen. Die Verformung des mit der Kraft beaufschlagten Zahnabschnittes ist über diesen integrierten Endanschlag derart limitiert, dass der Zahnabschnitt nicht überlastet wird und sich nicht plastisch, das heißt irreversibel, verformt.

Vorteilhafte Ausführungsformen sind in den Unteransprüchen beansprucht und werden nachfolgend näher erläutert.

Im Zusammenhang mit der Erläuterung der Ausführungsformen sind die Richtungsangaben auf das Zahnrad bezogen. Das heißt, dass die radiale Richtung in Längsrichtung der Zähne / Zahnabschnitte festgelegt ist. Die Umfangsrichtung ergibt sich in Richtung der aufeinanderfolgend angeordneten Zähne des Zahnrads. Die axiale Richtung ist in der Tiefe der Zähne und damit quer zur radialen Richtung festgelegt.

Im Zusammenhang mit der Erläuterung der Ausführungsformen wird des Weiteren die folgende begriffliche Abgrenzung vorausgesetzt. Die beiden Zahnabschnitte eines Zahns eines Zahnrads weisen einen proximalen, dem Zahnradgrundkörper zugewandten, Bereich und einen distalen, dem Zahnradgrundkörper abgewandten, Bereich, das heißt ein distales Ende auf. Das distale Ende weist an der äußeren Seite des Zahns / Zahnabschnittes eine Zahnflanke auf, die zum In-drehmomentübertragenden-Kontakt-Treten mit einem Gegenzahn eines anderen Zahnrads / Gegenzahnrads ausgeführt ist.

In dem der Zahnflanke abgewandten distalen Bereich des jeweiligen Zahnabschnittes ist eine Struktur vorgesehen, die zum In-Kontakt-Bringen mit einer Gegenstruktur des zweiten Zahnabschnittes ausgeführt ist. Die Struktur und Gegenstruktur sind vorzugsweise als Vorsprung und Ausnehmung ausgeführt. Die exakte geometrische Form ist variabel.

In einer bevorzugten Ausführungsform kann das Zahnrad für ein Uhrengetriebe, eine Vielzahl von Zähnen aufweisen, wobei jeder Zahn aus zwei voneinander in Umfangsrichtung beabstandeten Zahnabschnitten aufgebaut ist, wobei ein Zahnabschnitt jeweils eine Zahnflanke ausbildet, die selektiv in Abhängigkeit von der Drehrichtung des Zahnrads mit einem Gegenzahn eines Verzahnungspartners in drehmomentweitergebendem Kontakt steht, wobei jeder Zahnabschnitt mit einem vordefinierten Federweg ausgelegt ist und wobei die distalen Zahnabschnitte eines Zahns, geschwungen ausgebildet und zum miteinander In-Kontakt-Gelangen vorbereitet sind, wobei das distale Ende des einen Zahnabschnittes einen stufenartigen Vorsprung besitzt, der zum Eingreifen in eine Ausnehmung des distalen Endes des anderen Zahnabschnittes des gleichen Zahns ausgelegt ist.

Es hat sich als von Vorteil erwiesen, wenn die Ausnehmung und der Vorsprung so aufeinander und auf die bei dem jeweiligen Zahnabschnitt im Betrieb auftretende Verbiegung abgestimmt sind, dass sich bei einem In-Anschlag-Gelangen miteinander die Federsteifigkeiten der beiden Zahnabschnitte kombinieren.

Durch die Kombination der Federsteifigkeiten durch Anlage / In-Anschlag-Gelangen der Zahnabschnitte, ist es in im Hinblick auf den Schutz des Zahnabschnittes vor plastischer Verformung vorteilhafter Weise realisierbar, dass ein Endanschlag für die Bewegung des mit einer Belastung, wie einer Kraft oder einem Moment, beaufschlagten Zahnabschnittes ausbildbar ist.

Die Zahnabschnitte sind vorzugsweise derart ausgeführt, dass diese im Bereich der distalen Enden, das heißt in dem, den Zahnflanken in Umfangsrichtung abgewandten Bereich, einen geringeren Abstand zueinander aufweisen, als in dem radial weiter untenliegenden, Zahnradgrundkörper-nahen Bereich der Zahnabschnitte.

Zudem ist es vorteilhaft, wenn die Ausnehmung und der Vorsprung so aufeinander abgestimmt sind, dass das In-Anschlag-Gelangen an einem radial inneren Absatz der Ausnehmung und einer radial inneren Anschlagfläche des Vorsprungs oder einem radial äußeren Absatz der Ausnehmung und einer radial äußeren Anschlagfläche des Vorsprungs stattfindet.

Durch diese Ausführungsform der Ausnehmung und des Vorsprungs ist in vorteilhafter Weise über den Anschlag eine kraftschlüssige Verbindung über die Kontaktflächen, das heißt den Absatz und die Anschlagfläche, erzielbar. Der Vorsprung und die Ausnehmung sind derart in ihrer Position festgelegt. Zudem ist ein Kraftübertrag von dem belasteten Zahnabschnitt zu dem unbelasteten Zahnabschnitt realisierbar. Der belastete Zahnabschnitt stützt sich auf dem nicht belasteten Zahnabschnitt ab.

Des Weiteren ist es von Vorteil, wenn die Ausnehmung des einen Zahnabschnittes und der Vorsprung des anderen Zahnabschnittes einander gegenüberliegend ausgerichtet sind und / oder aufeinander zu ausgerichtet sind.

Durch die derartige Ausführungsform ist es im Hinblick auf die Abstützung in vorteilhafter Weise realisierbar, dass der Vorsprung und die Ausnehmung infolge einer Kraftbeaufschlagung eines Zahnabschnittes und einer damit einhergehenden Verlagerung / Positionsänderung in Umfangsrichtung durch Eintauchen des Vorsprungs in die Ausnehmung miteinander In-Kontakt-bringbar sind.

Dabei hat es sich von Vorteil erwiesen, wenn die Abstände zwischen den Absätzen und Anschlagflächen so gewählt sind, dass im Betrieb eine auftretende Verbiegung des einen Zahnabschnittes durch den anderen Zahnabschnitt des gleichen Zahns aufgehalten wird.

Der nicht belastete Zahnabschnitt stellt einen Endanschlag für den belasteten Zahnabschnitt vorzugsweise durch Erhöhung der Federrate dar. Die Federraten der Federabschnitte sind vorzugsweise derart vorbestimmbar, dass die Verformung bei den zu erwartenden auftretenden Belastungen vorzugsweise elastisch verbleibt. Das heißt, die Auslegung der Federraten ist vorzugsweise derart vorbestimmbar, dass unter den zu erwartenden Belastungen lediglich elastisches Werkstoffverhalten der Zahnabschnitte erfolgt.

Weiterhin ist es von Vorteil, wenn die beiden Zahnabschnitte eines Zahns von einem Grundkörper des Zahns voneinander getrennte, federnde Zahnabschnitte abstehen.

Durch diese Ausführungsform sind die Zahnabschnitte separat und damit getrennt voneinander beanspruchbar / belastbar. Derart ist es in vorteilhafter Weise realisierbar, dass eine einwirkende Belastung (Kraft, Moment) nicht gleichzeitig auf beide Zahnabschnitte einwirkt. Die beiden Zahnabschnitte sind im nicht belasteten Zustand hinsichtlich des Kraftflusses voneinander getrennt. Durch diese Ausführungsform ist ein Abstützen des einen Zahnabschnittes durch den anderen Zahnabschnitt in vorteilhafter Weise realisierbar.

Die Zahnabschnitte sind weiter bevorzugt an einem gemeinsamen Zahnradgrundkörper vorgesehen.

Zudem ist es vorteilhaft, wenn die Vorspannung der beiden Zahnabschnitte der Vielzahl der Zähne so gewählt ist, dass sich die jeweiligen Zahnflanken der beiden Zahnabschnitte der Zähne mit dem jeweiligen Gegenzahn gleichzeitig in Eingriff befinden.

Durch die derartige Ausführungsform der Vorspannung ist ein Aufheben des Umkehrspiels in vorteilhafter Weise herbeiführbar, da vorzugsweise das Zurücklegen eines Leerweges vermeidbar ist.

Es hat sich weiterhin als von Vorteil erwiesen, wenn die Ausnehmung so auf den Vorsprung abgestimmt ist, dass das In-Anschlag-Gelangen der beiden Zahnabschnitte im Bereich des Vorsprungs und der Ausnehmung einhergeht mit einer Zwangsweitergabe an Kraft, von einem der Zahnabschnitte zum anderen der Zahnabschnitte.

Durch die Zwangsweitergabe der Kraft / den Übertrag der Kraft / das Umleiten der Kraft ist ein Kraftübertrag von dem belasteten Zahnabschnitt auf den nicht belasteten Zahnabschnitt in im Hinblick auf die Reduktion der mechanischen Beanspruchung des belasteten Zahnrads in vorteilhafter Weise realisierbar.

Darüberhinausgehend ist es von Vorteil, wenn die Zahnflanken, der Vorsprung und die Ausnehmung integraler Bestandteil der Zahnabschnitte sind.

Durch die integrale Ausführungsform der Federabschnitte mit Zahnflanken und dem Vorsprung / der Ausnehmung im distalen Endbereich ist ein Vermeiden von Sollbruchstellen infolge einer zweiteiligen Ausführungsform in vorteilhafter Weise vermeidbar.

Es wird auch vorgestellt ein Uhrengetriebe mit zumindest einem Zahnrad, das im Betrieb mit einem Gegenzahnrad in Kontakt gelangt.

Die Erfindung wird nachfolgend mit Hilfe einer Zeichnung näher erläutert. Es ist eine erste Ausführungsform des erfindungsgemäßen Zahnrads dargestellt. Es zeigt:
Fig. 1 eine schematische Detaildarstellung eines Ausschnitts eines offenbarungsgemäßen Zahnrads in einer ersten Ausführungsform mit über jeweils zwei Zahnabschnitte ausgebildeten Zähnen in einer Seitenansicht,
Fig. 2 eine schematische Detaildarstellung eines Ausschnitts eines Zahnrads gemäß Fig. 1 und eines Gegenzahnrads,
Fig. 3 eine schematische Detaildarstellung der Position erster und zweiter Zahnflanken infolge des Eingreifens eines Gegenzahnrads gemäß Fig. 2,
Fig. 4 eine schematische Detaildarstellung eines Zahnes des offenbarungsgemäßen Zahnrads in einer Seitenansicht mit miteinander in Kontakt gebrachten Zahnabschnitten bei Belastung eines Zahnabschnittes mit einem Vorsprung und
Fig. 5 eine schematische Detaildarstellung eines Zahnes des offenbarungsgemäßen Zahnrads in einer Seitenansicht mit miteinander in Kontakt gebrachten Zahnabschnitten bei Belastung eines Zahnabschnittes mit einer Ausnehmung.

Die Figuren sind lediglich schematischer Natur und dienen nur dem Verständnis der Erfindung. Die gleichen Elemente sind mit denselben Bezugszeichen versehen.

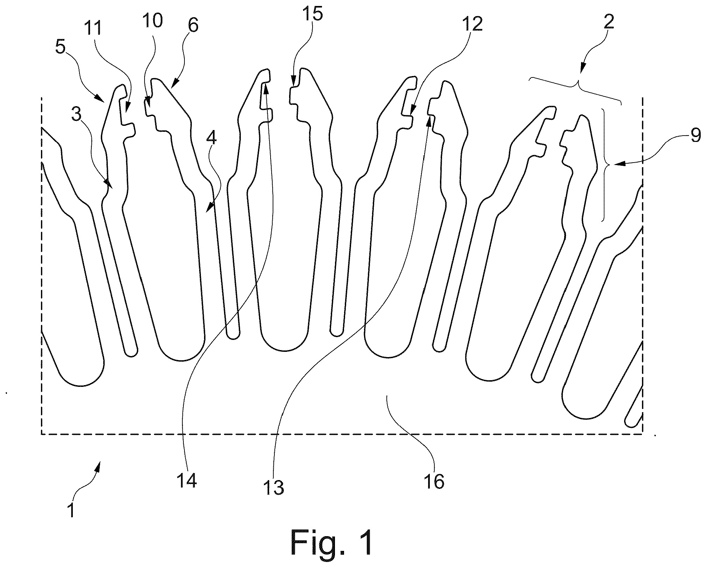

Die Fig. 1 zeigt eine schematische Detaildarstellung eines Ausschnitts eines offenbarungsgemäßen Zahnrads 1 in einer ersten Ausführungsform mit über Zahnabschnitten 3, 4 gebildeten Zähnen 2 in einer Seitenansicht.

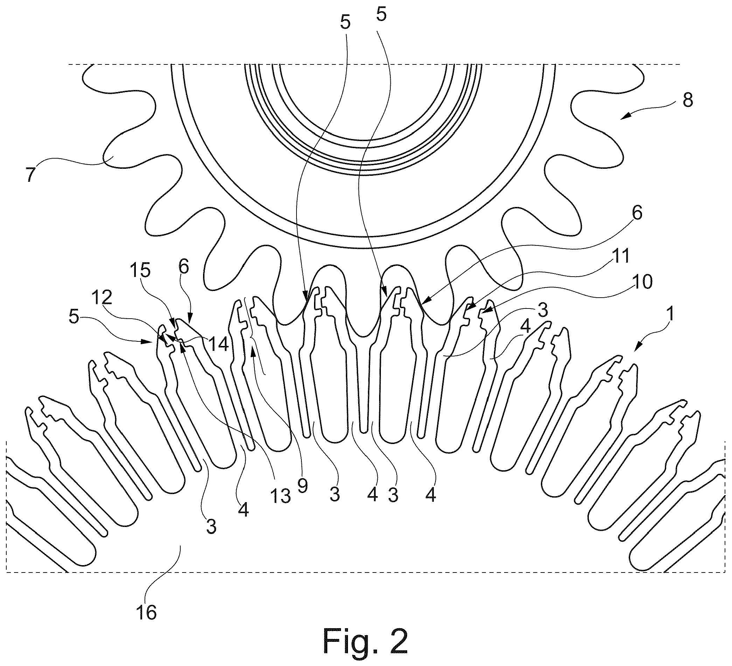

Im Detail ist dargestellt, ein Zahnrad 1 für ein Uhrengetriebe, das eine Vielzahl von Zähnen 2 aufweist. Jeder einzelne Zahn 2 der Vielzahl der Zähne 2 ist aus zwei voneinander in Umfangsrichtung beabstandeten Zahnabschnitten 3, 4 aufgebaut. Die Zahnabschnitte 3 oder 4 bilden jeweils eine Zahnflanke 5 oder 6 aus. Die Zahnflanken 5, 6 stehen selektiv in Abhängigkeit von der Drehrichtung des Zahnrads 1 mit einem Gegenzahn 7 eines in Fig. 1 nicht dargestellten Verzahnungspartners 8 beispielsweise gemäß Fig. 2 in drehmomentweitergebendem Kontakt.

Jeder Zahnabschnitt 3, 4 ist federnd ausgelegt. Die einzelnen Zahnabschnitte 3, 4 der Zähne 2 sind zum miteinander In-Kontakt-Gelangen vorbereitet. Die Zahnabschnitte 3, 4 weisen jeweils ein distales Ende 9 auf. Das distale Ende 9 des einen Zahnabschnittes 3 besitzt einen Vorsprung 10, der zum Eingreifen in eine Ausnehmung 11 des anderen Zahnabschnittes 4 des gleichen Zahns 2 ausgelegt ist.

Die Zahnabschnitte 3, 4 sind derart ausgeführt, dass zum einen der eine / der erste der Zahnabschnitte 3, 4 im distalen Endbereich 9 mit der Ausnehmung 11 ausgeführt ist, die einen radial inneren Absatz 12 aufweist, der zum In-Kontakt-Bringen mit der radial inneren Anschlagfläche 13 des Vorsprungs 10 des anderen der Zahnabschnitte 3, 4 eingerichtet ist. Zum anderen sind die Zahnabschnitte 3, 4 derart ausgeführt, dass der andere / der zweite der Zahnabschnitte 3, 4 einen radial äußeren Absatz 14 aufweist, der zum In-Kontakt-Bringen mit der radial äußeren Anschlagfläche 15 des Vorsprungs 10 des einen / des ersten der Zahnabschnitte 3, 4 eingerichtet ist. Die Zahnabschnitte 3, 4 sind an einem Zahnradgrundkörper 16 des Zahnrads 1 angeordnet.

In Fig. 2 ist über Fig. 1 hinausgehend dargestellt, dass das als erste Zahnrad 1 ausgeführte offenbarungsgemäße Zahnrad 1 in einen Verzahnungspartner / ein Gegenzahnrad 8 eingreift. Die beiden Zahnräder 1, 8 stehen über jeweils zwei Zahnabschnitte 3, 4 ausgebildete Zähne 2 und deren Gegenzähne 7 in drehmomentübertragendem Kontakt.

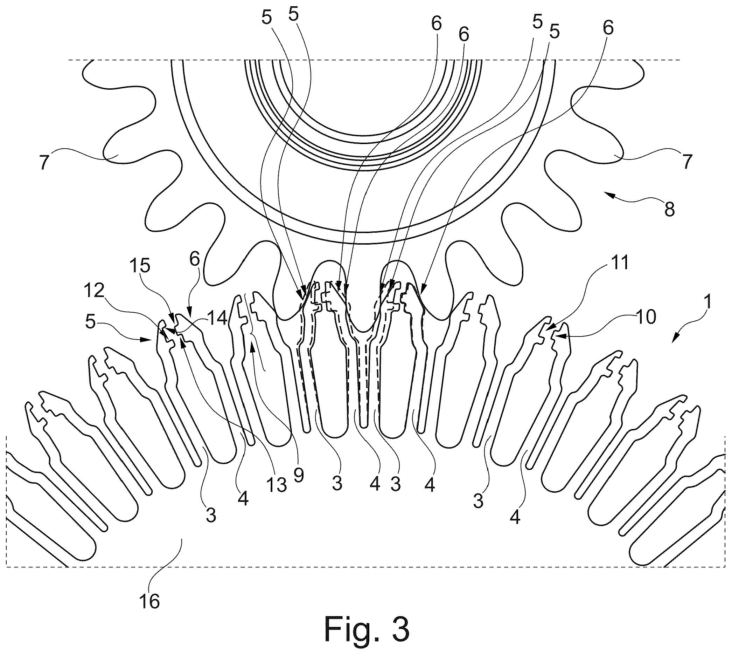

Die Fig. 3 zeigt eine schematische Detaildarstellung der Position erster Zahnflanken 3 und zweiter Zahnflanken 4 infolge des Eingreifens von Gegenzähnen 7 eines Gegenzahnrads 8 in das erste Zahnrad 1 gemäß Fig. 2.

Bedingt durch das Eingreifen der Gegenzähne 7 eines Gegenzahnrads 7 werden die ersten Zahnabschnitte 3 und die zweiten Zahnabschnitte 4 der Zähne 2 des Zahnrads 1 aus der freien Position in eine vorgespannte Position, das heißt in eine Eingriffsposition, gedrückt. Die jeweiligen Zahnflanken 5, 6 der Zahnabschnitte 3, 4 der Zähne 2 befinden sich mit den jeweiligen Gegenzähnen 7 gleichzeitig im Eingriff. Die ersten Zahnabschnitte 3 und die zweiten Zahnabschnitte 4 der Zähne 2 sind vorgespannt.

Die freie Position der ersten Zahnabschnitte 3 und der zweiten Zahnabschnitte 4 ist über gestrichelte Außenkonturen der ersten Zahnabschnitte 3 und der zweiten Zahnabschnitte 4 schematisch dargestellt. Die Eingriffspositionen der ersten Zahnflanken 3 und der zweiten Zahnflanken 4 ist über durchgezogene Linien schematisch gezeigt.

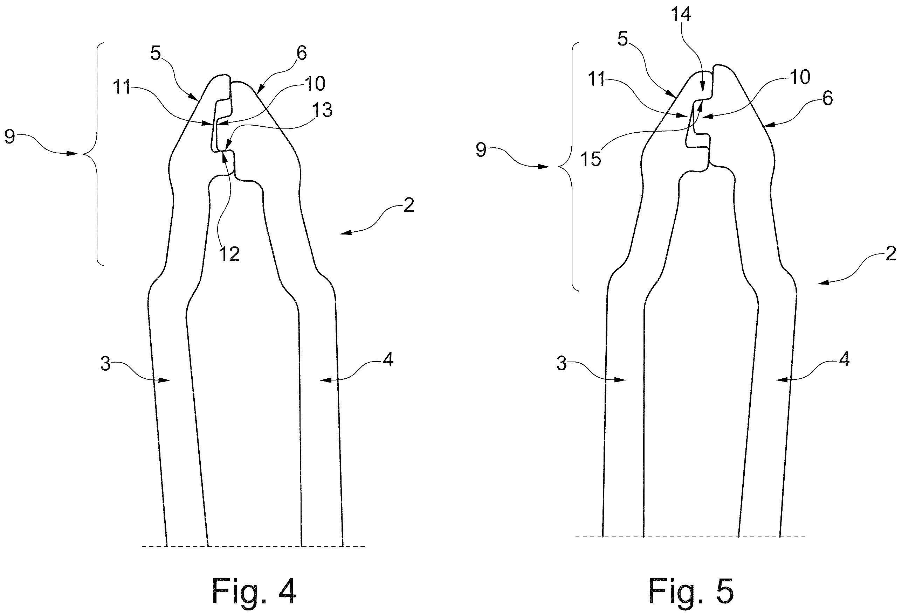

Die Fig. 4 zeigt eine schematische Detaildarstellung eines Zahnes 2 des offenbarungsgemäßen Zahnrads 1 in einer Seitenansicht mit miteinander in Kontakt gebrachten Zahnabschnitten 3, 4 bei Belastung eines Zahnabschnittes 3, der einen Vorsprung 10 aufweist.

Der Vorsprung 10 des einen Zahnabschnittes 3 ist zum Eintauchen in die Ausnehmung des anderen Zahnabschnittes 4 eingerichtet. Die Ausnehmung 11 des einen Zahnabschnittes 3 und der Vorsprung 10 des anderen Zahnabschnittes 4 sind so aufeinander abgestimmt, dass das In-Anschlag-Gelangen an dem radial inneren Absatz 12 der Ausnehmung 11 des einen Zahnabschnittes 3 und der radial inneren Anschlagfläche 13 des Vorsprungs 10 des anderen Zahnabschnittes 4 erfolgt.

Durch den Kontakt des mit einer Kraft / einem Moment belasteten Zahnabschnittes 4 mit dem Zahnabschnitt 3, erhöht sich die Federrate derart, dass ein plastisches Verformen und damit eine Beschädigung des Zahnabschnittes 4 unter der einwirkenden Kraft / den einwirkenden Momenten ausgeschlossen ist. Es ist somit ein Endanschlag in den Zahn 2 integriert.

Die Fig. 5 zeigt eine schematische Detaildarstellung eines Zahnes 2 des offenbarungsgemäßen Zahnrads 1 in einer Seitenansicht mit miteinander in Kontakt gebrachten Zahnabschnitten 3, 4 bei Belastung eines Zahnabschnittes 3 mit einer Ausnehmung 9.

Die Ausnehmung 11 des einen Zahnabschnittes 3 und der Vorsprung 10 des anderen Zahnabschnittes 4 sind so aufeinander abgestimmt, dass das In-Anschlag-Gelangen an dem radial äußeren Absatz 14 der Ausnehmung 11 des Zahnabschnittes 3 und der radial äußeren Anschlagfläche 15 des Vorsprungs 10 des Zahnabschnittes 4 erfolgt.

Durch den Kontakt des mit einer Kraft / einem Moment belasteten Zahnabschnittes 4 mit dem Zahnabschnitt 3, erhöht sich die Federrate derart, dass ein plastisches Verformen und damit eine Beschädigung des Zahnabschnittes 4 unter der einwirkenden Kraft / den einwirkenden Momenten ausgeschlossen ist. Es ist somit ein Endanschlag in den Zahn 2 integriert.

### Bezugszeichenliste

- 1: Zahnrad
- 2: Zahn
- 3: Ein Zahnabschnitt / erster Zahnabschnitt
- 4: Anderer Zahnabschnitt / benachbarter Zahnabschnitt / zweiter Zahnabschnitt
- 5: Erste Zahnflanke
- 6: Zweite Zahnflanke
- 7: Gegenzahn
- 8: Verbindungspartner / Zweites Zahnrad / Gegenzahnrad
- 9: Distales Ende
- 10: Vorsprung
- 11: Ausnehmung
- 12: Radial innerer Absatz
- 13: Radial innere Anschlagsfläche
- 14: Radial äußerer Absatz
- 15: Radial äußere Anschlagfläche
- 16: Zahnradgrundkörper

## Patentansprüche

1. Zahnrad (1) für ein Uhrengetriebe, das eine Vielzahl von Zähnen (2) aufweist, wobei jeder Zahn (2) aus zwei voneinander in Umfangsrichtung beabstandeten Zahnabschnitten (3, 4) aufgebaut ist, wobei ein Zahnabschnitt (3 oder 4) jeweils eine Zahnflanke (5 oder 6) ausbildet, die selektiv in Abhängigkeit von der Drehrichtung des Zahnrads (1) mit einem Gegenzahn (7) eines Verzahnungspartners (8) in drehmomentweitergebendem Kontakt steht, wobei jeder Zahnabschnitt (3, 4) federnd ausgelegt ist, wobei die Zahnabschnitte (3, 4) eines Zahns (2) zum miteinander In-Kontakt-Gelangen vorbereitet sind, **dadurch gekennzeichnet, dass** das distale Ende (9) des einen Zahnabschnittes (3) einen Vorsprung (10) besitzt, der zum Eingreifen in eine Ausnehmung (11) des anderen Zahnabschnittes (4) des gleichen Zahns (2) ausgelegt ist.

2. Zahnrad (1) nach Anspruch 1, **dadurch gekennzeichnet, dass** das distale Ende (9) als geschwungener Endabschnitt des einen Zahnabschnittes (3) ausgebildet ist und der Vorsprung, der zum Eingreifen in die Ausnehmung (11) des anderen Zahnabschnittes (4) des gleichen Zahns (2) vorgesehen ist, stufenartig ausgebildet ist.

3. Zahnrad (1) nach einem der der Ansprüche 1 oder 2, **dadurch gekennzeichnet, dass** die Ausnehmung (11) und der Vorsprung (10) so aufeinander und auf die bei dem jeweiligen Zahnabschnitt (3, 4) im Betrieb auftretende Verbiegung abgestimmt sind, dass sich bei einem In-Anschlag-Gelangen miteinander die Federsteifigkeiten der beiden Zahnabschnitte (3, 4) kombinieren.

4. Zahnrad (1) nach einem der Ansprüche 1 bis 3, **dadurch gekennzeichnet, dass** die Ausnehmung (11) und der Vorsprung (10) so aufeinander abgestimmt sind, dass das In-Anschlag-Gelangen an einem radial inneren Absatz (12) der Ausnehmung (11) und einer radial inneren Anschlagfläche (13) des Vorsprungs (10) oder einem radial äußeren Absatz (14) der Ausnehmung (11) und einer radial äußeren Anschlagfläche (15) des Vorsprungs (10) stattfindet.

5. Zahnrad (1) nach einem der Ansprüche 1 bis 4, **dadurch gekennzeichnet, dass** die Ausnehmung (11) des einen Zahnabschnittes (3) und der Vorsprung (10) des anderen Zahnabschnittes (4) einander gegenüberliegend ausgerichtet sind und / oder aufeinander zu ausgerichtet sind.

6. Zahnrad (1) nach einem der Ansprüche 4 bis 5, **dadurch gekennzeichnet, dass** die Abstände zwischen den Absätzen (12, 14) und
Anschlagflächen (13, 15) so gewählt sind, dass im Betrieb eine auftretende Verbiegung des einen Zahnabschnittes (3) durch den anderen Zahnabschnitt (4) des gleichen Zahns (2) aufgehalten wird.

7. Zahnrad (1) nach einem der Ansprüche 1 bis 6, **dadurch gekennzeichnet, dass** die beiden Zahnabschnitte (3, 4) eines Zahns (2) von einem Grundkörper (16) des Zahns (2) als voneinander getrennte, federnde Zahnabschnitte (3, 4) abstehen.

8. Zahnrad (1) nach einem der Ansprüche 1 bis 7, **dadurch gekennzeichnet, dass** die Vorspannung der beiden Zahnabschnitte (3, 4) der Vielzahl der Zähne (2) so gewählt ist, dass sich die jeweiligen Zahnflanken (5, 6) der beiden Zahnabschnitte (3, 4) der Zähne (2) mit dem jeweiligen Gegenzahn (7) gleichzeitig in einem Eingriff befinden.

9. Zahnrad (1) nach einem der Ansprüche 6 bis 8, **dadurch gekennzeichnet, dass** die Ausnehmung (11) so auf den Vorsprung (10) abgestimmt ist, dass das In-Anschlag-Gelangen der beiden Zahnabschnitte (3, 4) im Bereich des Vorsprungs (10) und der Ausnehmung (11) einhergeht mit einer Zwangsweitergabe an Kraft, von einem der Zahnabschnitte (3, 4) zum anderen der Zahnabschnitte (3, 4).

10. Zahnrad (1) nach einem der Ansprüche 6 bis 9, **dadurch gekennzeichnet, dass** die Zahnflanken (5, 6), der Vorsprung (10) und die Ausnehmung (11) integraler Bestandteil der Zahnabschnitte (3, 4) sind.

11. Uhrengetriebe mit zumindest einem Zahnrad (1) nach einem der Ansprüche 1 bis 10, das im Betrieb mit einem Verzahnungspartner (8) in Kontakt kommt.
